# EUROPÄISCHE PATENTSCHRIFT

(11) **EP 0 550 076 B1**
(45) Veröffentlichungstag und Bekanntmachung des Hinweises auf die Patenterteilung: **25.09.1996**
(21) Anmeldenummer: 92122175.0
(22) Anmeldetag: 29.12.1992
(51) Int. Cl.: G01J 3/28

(54) **Spektrometer mit integriertem Halbleitersensor**
Spectrometer with integrated semi-conductor sensor
Spectromètre avec capteur à semi-conducteur intégré

(30) Priorität: 30.12.1991 DE 4143284
(43) Veröffentlichungstag der Anmeldung: 07.07.1993
(73) Patentinhaber: Engel, Klaus-Eberhard, 15234 Frankfurt (Oder) (DE); Ehwald, Karl-Ernst, 15232 Frankfurt (Oder) (DE)
(72) Erfinder: Schley, Peter, Dr., O-1200 Frankfurt (Oder) (DE); Winkler, Wolfgang, Dr., O-1200 Frankfurt (Oder) (DE); Ehwald, Karl-Ernst, O-1200 Frankfurt (Oder) (DE); Engel, Klaus Eberhard, O-1200 Frankfurt (Oder) (DE)

(56) Entgegenhaltungen:
- EP-A- 0 192 200
- EP-A- 0 332 211
- EP-A- 0 355 174
- US-A- 4 134 683
- US-A- 4 820 048

## Beschreibung

Die Erfindung betrifft die Detektierung von Strahlung in spektrometrischen Einrichtungen, insbesondere ein optisches Spektrometer mit einem integrierten Halbleitersensor.

Für die simultane Messung eines großen Spektralbereiches mit hoher spektraler Auflösung existiert neben konventionell eindimensionale auflösenden Spektrometern ein spezieller Typ von Spektralgeräten, die Echelle-Spektrometer mit interner Ortstrennung, welche das Spektrum einer Strahlungsquelle als zweidimensionale Anordnung von nebeneinander liegenden Teilspektren, den Ordnungen, in einer Bildebene erzeugen. Dabei sind die nur annähernd geraden Ordnungen des Spektrums auch nur annähernd parallel und mit ungleichmäßigem Abstand voneinander in der Bildebene angeordnet. Der Informationsgehalt des Spektrums, welcher zu einer Aussage über die zu untersuchende Strahlungsquelle genutzt werden soll, ist je nach Strahlungsquelle unregelmäßig, aber reproduzierbar im Spektrum verteilt. Darüber hinaus enthalten die Zwischenräume zwischen den Teilspektren Informationen über die Streustrahlung, welche durch die Kombination der Eigenschaften von Strahlungsquelle und Spektralgerät bestimmt werden. Zur Erfassung der Intensität in Abhängigkeit von der Wellenlänge, welche in der Bildebene als ortsabhängige Intensitätsverteilung vorliegt, werden linien- und flächenhafte Strahlungssensoren in verschiedener Form eingesetzt.

### 1. CCD-Sensorzeilen als Detektoren

Eine typische Anwendung wird in Spectrochem. Acta, Vol. 42 B, Nr. 1/2, 1987, S.341 beschrieben, bei der zunächst eine Vorauswahl der bedeutenden Spektrallinien mittels eines Polychromators erfolgt, um mittels eines nachfolgenden Echelle-Spektrometers das Teilspektrum auf eine CCD-Sensorzeile abzubilden. Dieses Verfahren ist sowohl optisch als auch mechanisch sehr kompliziert zu handhaben und häufig durch Linienkionzidenzen benachteiligt. Die Zahl der zu untersuchenden Spektrallinien liegt bei nur ca. 10, Streustrahlungsverhältnisse und Emissionsverhalten der Quelle können nicht simultan erfaßt werden.

### 2. Detektorsysteme mit diskreten Meßstellen

In einigen Fällen, wie z. B. in US-PS 4049353 werden Schlitz-Masken in die Fokalebene des Spektrums gestellt, um mittels Lichtleiter die Information über nur eine Spektrallinie an Einzeldetektoren zuzuführen. Ähnlich diskret werden Informationen von nur einer Linie allein registriert in der DE-PS 2946862, indem auf einem Chip einzelne Fotoaufnehmer angeordnet sind. Nachteilig ist, daß die Umgebung der Spektrallinien, Streustrahlungsverhältnisse und das Emissionsverhalten der Quelle nicht simultan erfaßt werden können.

### 3. Großflächige Sensoren

In vielen Fällen wurden zur Registrierung des Gesamtspektrums flächenhafte Detektorsysteme, wie Vidicons, Dissektorröhren oder CCD-Sensor-Matrizen, eingesetzt (Y. Talme, "Multichanel Image Detectals", American Chemical Society, Washington D.C. 1979). Der Einsatz dieser Detektorsysteme ist vor allem durch eine ungenügende Anpassung an die Erfordernisse der Registrierung benachteiligt. Um die allgemein geforderte hohe Ortsauflösung des Detektors über die resultierende große Fokalfläche, die sich aus unregelmäßig und gekrümmt angeordneten Ordnungszeilen zusammensetzt, zu realisieren, muß eine hohe Zahl von Sensoren ausgewertet werden, was zu einer reduzierten Zeitauflösung führt und ein geringes Signal/Rauschverhältnis bedingt. Will man auf diesem Wege die Umgebungsverhältnisse kontinuierlicher Spektren, einer Spektrallinie (Untergrundstrahlung) sowie die Streustrahlungsverhältnisse und das Emissionsverhalten der Quelle simultan erfassen, übersteigt die dazu notwendige Informationsmenge die Akzeptanz der zeitlichen Auflösung. Damit sind wesentliche Einschränkungen des Spektrometereinsatzes verbunden.

### 4. Monolithische, linienzugeordnete Detektoranordnung

Aus US-PS 4820048 ist eine Detektoranordnung bekannt, die eine spezielle zweidimensionale Anordnung von strahlungsempfindlichen Pixeln an nur solchen Projektionsorten verwendet, an denen wenigstens eine relevante Spektrallinie vorhanden ist. Hier werden lediglich die fest vorgegebenen Linien sowie deren unmittelbare Umgebung, jedoch nicht die weiteren Bereiche der flächenhaften Spektralanordnung untersucht. Nachteilig ist, daß kontinuierliche Spektren (Bandenspektren), die fernere Umgebung von Spektrallinien, die Streustrahlungsverhältnisse über die resultierend große Fokalfläche und das Emissionsverhalten der Quelle nicht simultan erfaßt werden können.

Weiterhin ist aus EP - A - 0 332 211 ein Halbleitersensor - bestehend aus einer Vielzahl von Strahlungsdetektoren mit nachgeschalteten Ladungsspeichern - für Spektrometer bekannt, bei dem die Detektoren in Gruppen für ganz spezielle Meßaufgaben angeordnet sind. Dieses findet man ebenso in EP - A - 0 355 174. In beiden Fällen sind jedoch die so ausgerüsteten Spektrometergeräte für Analysen von diskreten Spektren aufgabenspezifisch fixiert und nicht universell einsetzbar. Für Bandenspektren können sie nicht eingesetzt werden.

Insgesamt kann festgestellt werden, daß die hohen Anforderungen an die Orts- und Zeitauflösung, an die Streustrahlungs- sowie an die Quellenstabilitätserfassung prinzipiell gegeneinander konkurrieren. Keine der vorgenannten Spektrometerdetektorsysteme ist den speziellen Anforderungen einer umfassenden simultanen Auswertung von linien- oder flächenhaften Spektralanordnungen bezüglich kontinuierlicher Spektren, der Linienerfassung, der Intensitätsauswertung der Spektrallinien, der Untergrundstrahlung der Linienumgebung, einer flächenbezogenen Streustrahlungskorrektur und einer Registrierung der Lichtquellenemisssion ausreichend angepaßt.

Ziel der Erfindung ist es, die Nachteile und die Einschränkungen der bisher bekannten Spektrometerdetektorsysteme zu überwinden.

Der Erfindung liegt die Aufgabe zugrunde, eine aufgabenmobile Spektrometeranordnung zur Untersuchung ein- oder zweidimensionaler Spektren zu schaffen, welche die simultane Messung der gesamten, jeweils analytisch relevanten Informationen eines Banden- bzw. diskreten Spektrums einer Analysenanordnung mit hoher Zeitauflösung bei geringen Anforderungen an die Steuer- und Auswerteelektronik gestattet.

Die Aufgabe wird erfindungsgemäß dadurch gelöst, daß in der Fokalfläche des Spektrometers ein Halbleitersensor als ein integriertes Bauelement angeordnet ist, auf dessen Oberfläche über wesentliche Wellenlängenbereiche des abgebildeten Spektrums regelmäßig und lückenlos Strahlungsdetektoren angeordnet sind, deren Abmessungen jeweils der Ortsauflösung und örtlichen Verteilung des abgebildeten Spektrums entsprechen. Die den Detektoren nachgeschalteten Speicher-, Transport-, Verstärker und Schaltungseinrichtungen sind derart angeordnet und eingerichtet, daß durch eine gemeinsame Logikschaltung aus anwählbaren Teilen der (des) genutzten zusammenhängenden Wellenlängenbereiche(s) intensitätsbezogene Signale von Bandenspektren, Spektrallinien, Untergrundstrahlung der Linienumgebung, von flächenbezogenen Streustrahlunganteilen sowie von der Lichtquelle selbst zu einem oder mehreren Ausgängen geführt werden. Die anwählbaren zusammenhängenden Abschnitte des integrierten Halbleitersensors arbeiten vorzugsweise nach den Prinzipien ladungsgekoppelter Bauelemente (CCD) und ermöglichen durch die Zuordnung eines zusätzlichen Speichergebietes und die koordinierte Taktung von zwei an jedem Detektor angebrachten Schaltungseinrichtungen die Realisierung streng simultaner Messungen der Strahlungsintensität an allen Detektoren innerhalb eines in weiten Grenzen frei wählbaren Zeitfensters, aber auch alternativ die Anpassung der in jedem einzelnen anwählbaren zusammenhängenden Abschnitt angewendeten Integrationszeit an die auf den betreffenden Abschnitt fallende Strahlungsintensität durch entsprechende Anwahlzyklen oder durch eine geeignete Taktung eines erst durch die Anwahl des betreffenden Abschnittes aktivierten und an jedem Detektor dieses Abschnittes wirksamen zusätzlichen Schalters, mittels dessen die Ladungsintegration des Detektors zeitweise unterdrückt werden kann.

In einer Ausgestaltung der den Detektoren nachgeschalteten Ladungs-, Transport-, Verstärker- und Schaltungseinrichtungen werden diese derart ausgelegt, daß die zu einem gegebenen Zeitpunkt nicht angewählten Detektorabschnitte von der Taktspannungsversorgung und/oder den Versorgungspotentialleitungen und/oder von einer gemeinsamen Ausgangssignal leitung abgetrennt werden, um die Anzahl der Chiptotalausfälle durch Defekte und Kurzschlüsse innerhalb eines Abschnittes zu verringern. Weiterhin wird in einer Ausgestaltung des in der Fokalfläche des Spektrometers angeordneten Halbleitersensors dieser als ein hybrides Bauelement ausgebildet, in dem mehrere auf einem gemeinsamen Substrat positionierte, monolithisch integrierte Halbleiterchips oben beschriebener Art so im abgebildeten Spektrum angeordnet sind, daß keine für die vorgesehene Meßaufgabe wesentlichen Teile des Spektrums in die nicht mit Detektoren belegbaren Randgebiete der Halbleiterchips oder in die zwischen diesen Chips nicht nutzbaren Zwischenräume fallen. Durch diese Ausgestaltung wird die Fläche der Einzelchips in bezug auf die Fläche des Gesamtdetektors verringert und damit auch bei sehr großen Detektorflächen eine brauchbare Chipausbeute ermöglicht. Die Verwendung derartiger großflächiger Detektoren vereinfacht die optische Konstruktion der Spektrometer und verbessert gleichzeitig die spektrale AufLösung.

Die Erfindung soll nachstehend anhand eines Ausführungsbeispieles näher erläutert werden.

In einem Echelle-Spektrometer, das für Analysen der Molekül- und Atomspektroskopie eingesetzt wird, entstehen in an sich bekannter Weise auf einer zweidimensionalen Fläche Atomlinien, deren relative Positionen im Spektrometer mit identischem Dispersionssystem konstant sind, oder charakteristische Bandenspektren der zu untersuchenden Moleküle. Da für Analysen Informationen über Bandenspektren, über eine endliche Menge ausgewählter Atomlinien, über die Untergrundstrahlung der unmittelbaren Umgebung dieser Linien, über die Streustrahlungsverteilung der gesamten Abbildungsfläche sowie über das Emissionsverhalten der Lichtquelle während der Lichtintegrationszeit zu erfassen sind, werden über ausgewählte Wellenlängenbereiche des Sensors regelmäßig und lückenlos empfindliche Detektoren mit angepaßten Abmessungen in Gruppen so angeordnet, daß ihre freie Anwahl, eine simultane Lichtintegration, sowie die erforderliche Zwischenspeicherung, Informationsverarbeitung und Ausgabe der Signale ermöglicht wird. Die Abmessungen der Sensoren werden derart gestaltet, daß sie an Orten, an denen zu untersuchende Spektrallinien erwartet werden, den Dimensionen der abgebildeten Linien folgen. In einem Bereich um einen solchen Linienort herum werden beidseitig in Dispersionsrichtung des Gitters Detektoren mit gleichen Abmessungen angeordnet. Es folgen dann in weiter anschließenden Bereichen, in denen keine oder unbedeutende, nicht zu erfassende Spektrallinien erwartet werden, in denen Streulichtanteile des optischen Systems, Anteile der Untergrundstrahlung sowie Molekülspektren zu analysieren sind, gemäß den Ordnungsbereichen in dem zweidimensionalen Spektralmuster entsprechend strukturierte Detektoren.

Die den Sensoren nachgeschalteten Ladungsspeichereinrichtungen, Versorgungspotentialleitungen, Logikschaltungen und Ausgangsverstärker führen durch eine gemeinsame Logikschaltung aus anwählbaren Teilen der Wellenlängenbereiche intensitätsbezogene Signale von Bandenspektren, Spektrallinien, Untergrundstrahlung der Linienumgebung, von flächenbezogenen Streustrahlungsanteilen sowie von der Lichtquelle selbst Signale seriell zu einem Ausgang des Chips.

## Patentansprüche

1. Spektrometer, die eine ein- oder zweidimensionale Anordnung eines Spektrums erzeugen, mit integriertem, nach den Prinzipien ladungsgekoppelter Bauelemente (CCD) arbeitender Halbleitersensor, bestehend aus einer Vielzahl von Strahlungsdetektoren, Ladungsspeicher- und Transporteinrichtungen, Versorgungspotentialleitungen, Logikschaltungen und Ausgangsverstärkern, die in einer ein- oder zweidimensionalen Anordnung die Strahlung von Teilgebieten des Spektrums in elektrische Signale gemäß der Intensitäten umzusetzen vermögen, **dadurch gekennzeichnet**, daß auf einem oder mehreren zusammenhängenden Wellenlängenbereich(en) des auf dem integrierten Halbleitersensor abgebildeten Spektrums regelmäßig und lückenlos angeordnete Strahlungsdetektoren jeweils an die sich aus dem Blenden- und Dispersionssystem des Spektrometers und der zu untersuchenden Strahlungsquelle ergebenden ortsauflösenden Bedingungen angepaßte Abmessungen besitzen und entsprechend der Zeilenstruktur des Spektrums angeordnet sind und daß durch die den Detektoren nachgeschalteten Speicher-, Ladungstransport-, Verstärker- und Schaltungseinrichtungen zusammen mit einer Logikschaltung sowohl die Signale der Detektoren anwählbarer zusammenhängender Abschnitte wenigstens eines regelmäßig mit Detektoren belegten Wellenlängenbereiches einzeln oder teilweise zusammengefaßt, seriell und/oder parallel ausgelesen werden, als auch die Lichtintegrationszeit der einzelnen Abschnitte gesteuert wird, wobei durch die Zuordnung eines zusätzlichen Speichergebietes und die koordinierte Taktung von zwei an jedem Detektor angebrachten Schaltungseinrichtungen und mittels der den Detektoren nachgeschalteten Transport- und Schaltungseinrichtungen sowie der integrierten Logikschaltungen der Ladungsintegrationsvorgang aller Detektoren simultan gestartet und nach einer unabhängig von der Auslese zeit des gesamten Halbleitersensors bzw. eines angewählten zusammenhängenden Abschnittes vorgebbaren Zeit simultan beendet wird oder daß die Ladungsintegrationszeit der anwählbaren Abschnitte an die jeweiligen Strahlungsintensitäten angepaßt unterschiedlich eingestellt wird.

2. Spektrometer nach Anspruch 1, **dadurch gekennzeichnet**, daß die zu einem gegebenen Zeitpunkt nicht angewählten zusammenhängenden Abschnitte durch geeignete Logik- und Steuerelemente von der Taktspannungsversorgung und/oder den Versorgungspotentialleitungen und/oder von einer gemeinsamen Ausgangssignalleitung abgetrennt werden.

3. Spektrometer nach Anspruch 1, **dadurch gekennzeichnet**, daß der integrierte Halbleitersensor für ein zweidimensionales Spektrum eines Echelle-Spektrometers aus mehreren exakt auf einem gemeinsamen Substrat positionierten monolithisch integrierten Halbleiterchips besteht, welche derart konstruiert und im abgebildeten Spektrum angeordnet sind, daß keine für die vorgesehene Meßaufgabe wesentlichen Teile des Spektrums in die nicht mit Detektoren belegbaren Randgebiete besagter Halbleiterchips bzw. in die zwischen diesen Chips notwendig vorhandenen, nicht nutzbaren Zwischenräume fallen.

## Claims

1. Spectrometer with an one- or two-dimensional resolved spectrum, using an integrated CCD semiconductor sensor, containing radiation detectors, charge storage and transport elements, logic circuits and analogous output signal amplifiers, characterized by the following outstandig features:
- The single detector elements are arranged, correspondent to the line structure of the spectrum, regular and without insensitive areas between adjoining elements in one or several connected parts of the projected spectrum and adapted in their dimensions to the lateral resolution and the height of said spectrum, as determinated by the dispersion system, the diaphragm and the radiation source.
- At least in one connected part of the projected spectrum with the regular and without insensitive areas between themselfes arranged detector elements, the totality of the detector elements is divided in connected groups which can be separately selected to read out the signals of their detector elements individual or partial combined in a serial or parallel manner by means of the charge storage-, transport-, amplification- and circuit elements, assigned to the detector elements.
- An additional charge-storage region and two additional coordinated swiching circuit elements are assigned to each detector element and the light integration of the detector elements of the selected detector group or groups or of the complete detector is started and finished syncronously and independend of the read-out time of the selected detector group or groups or of the complete sensor by means of the above mentioned additional charge storage and swiching elements and by means of the other charge storage-, transport-, amplification- and circuit elements assigned to the detector elements or alternatively the charge integration time of the selected detector groups is choosen different and adapted at the different radiation intensity by means of the same charge storage-, transport-, amplification- and circuit elements.

2. Spectrometer according to claim 1., characterized by the feature, that the connected groups of sensors, (which are) not used at a given moment, are separated (swiched off) from the common feeding- and/or controlling- and/or output signal leeds by means of adapted logic- and circuit elements.

3. Spectrometer according to claim 1., characterized by the feature, that the integrated semiconductor sensor of an two-dimensional Echelle-spectrometer consists of two or more monolithic integrated semiconductor chips, arranged on exactly fixed positions of a common substrate and in the projected spectrum and being constructed in such a way, that all parts of the spectrum, which are important for a given measurement, are projected in the active areas of the monolithic integrated semiconductor chips and not in the dead spacings between them.

## Revendications

1. Spectromètre produisant une disposition unidimensionnelle ou bidimensionnelle d'un spectre au moyen d'un capteur semi-conducteur intégré fonctionnant selon le principe d'éléments couplés par charges (CCD) composé d'une multitude de détecteurs de rayonnement, d'enregistrement de charges et de leurs moyens de transport, de conducteurs de potentiels d'alimentation, de circuits logiques et d'amplificateurs de sortie, capable de transformer le rayonnement de segments du spectre en signaux électriques selon leurs intensités, **caractérisé** en ce que les détecteurs de rayonnement sont disposés régulièrement et sans écart entre eux sur le capteur semi-conducteur intégré sur lequel est représenté le spectre et que les dimensions des détecteurs correspondent à ceux des dimensions de la résolution locale des diaphragmes et du système de dispersion du spectromètre ainsi qu'à la source de rayonnement à analyser. que ces éléments sont disposés selon la structure des raies spectrales et que les dispositifs reliés aux détecteurs pour l'enregistrement, le transport, l'amplification et la commutation de charges sont connectés à des circuits logiques permettent la lecture des signaux émanant des détecteurs sélectionnables de portions adjacents de longueurs d'ondes d'au moins un des domaines spectraux regulièrement couvert par des détecteurs. soit en isolation ou partiellement combinés. soit en Série et/ou en parallèle. ainsi que le contrôle du temps d'intégration de lumière des différents secteurs, et où par l'adjonction d'un domaine d'enregistrement supplémentaire et l'application d'impulsions de contrôle coordonnées de deux dispositifs de commutation fixés à chaque détecteur, et au moyen des dispositifs de transport et de commutation connectés aux détecteurs et des circuits logiques intégrés, l'intégration des charges de tous les détecteurs peut être initiée simultanément et terminée simultanément après un laps de temps préétabli, indépendant du temps de lecture du capteur semi-conducteur entier respectivement d'une partie sélectionnable cohérente de celui-ci, ou que le temps d'intégration de charges des portions sélectionnables est différenciée en fonction de différentes intensités de rayonnement.

2. Spectromètre selon la revendication 1, **caractérisé** en ce que les différentes parties cohérantes non sélectionnées à un certain moment sont déconnectées de l'alimentation de la tension d'application d'impulsions de contrôle et/ou des alimentations de potentiel et/ou d'une sortie de signaux commune par des circuits logiques et d'éléments de contrôle appropriés.

3. Spectromètre selon la revendication 1, **caractérisé** en ce qu'il est construit sur un support unique, dans le cas d'un spectre bi-dimensionnel d'un spectromètre échelle, et composé de plusieurs plaquettes de semi-conducteur intégrés, positionnées de façon monolithique et disposes avec précision par rapport au spectre représenté de façon à ce qu'aucune partie du spectre déterminable pour la mesure prévue soit située sur les domaines marginaux, respectivement les interstices inévitables mais non utilisables entre lesdites plaquettes de semi-conducteurs.
